# EUROPEAN PATENT APPLICATION

(11) **EP 0 946 061 A2**
(43) Date of publication of application: **29.09.1999**
(21) Application number: 99301904.1
(22) Date of filing: 12.03.1999
(51) Int. Cl.: H04N 7/173

(54) **Method and apparatus for providing advertisement supported communications**

(30) Priority: 23.03.1998 US 46045
(71) Applicant: AT&T Corp., New York, NY 10013-2412 (US)
(72) Inventor: Goldberg, Randy G., Princeton, New Jersey 08540 (US); Hanson, Bruce Lowell, Little Silver, New Jersey 07739 (US); Mane, Amir M., Lincroft, New Jersey 07738 (US); Stuntebeck, Peter H., Little Silver, New Jersey 07739 (US)
(74) Representative: Suckling, Andrew Michael

(57) **Abstract**

A method and apparatus providing a communication service in which sponsors pay for communication services initiated by a caller. A caller may invoke the service by entering only the telephone number identifying the desired connection. A communication switch interprets the digits entered by the caller, determines whether the caller wishes to invoke the advertiser supported communication service and if so plays a message to the caller. At the end of the message the communication switch completes the desired connection.

## Description

### BACKGROUND OF THE INVENTION

The present invention relates to an advertisement supported communication service.

Proprietors of communication networks currently are investigating alternative service arrangements to expand the reach of communication services. One such alternative envisions advertiser supported communication services wherein a consumer listens to an advertisement over the telephone then places a desired call either without charge or at some reduced rate of service. Sponsors of the advertisements would incur charges for the consumer's call.

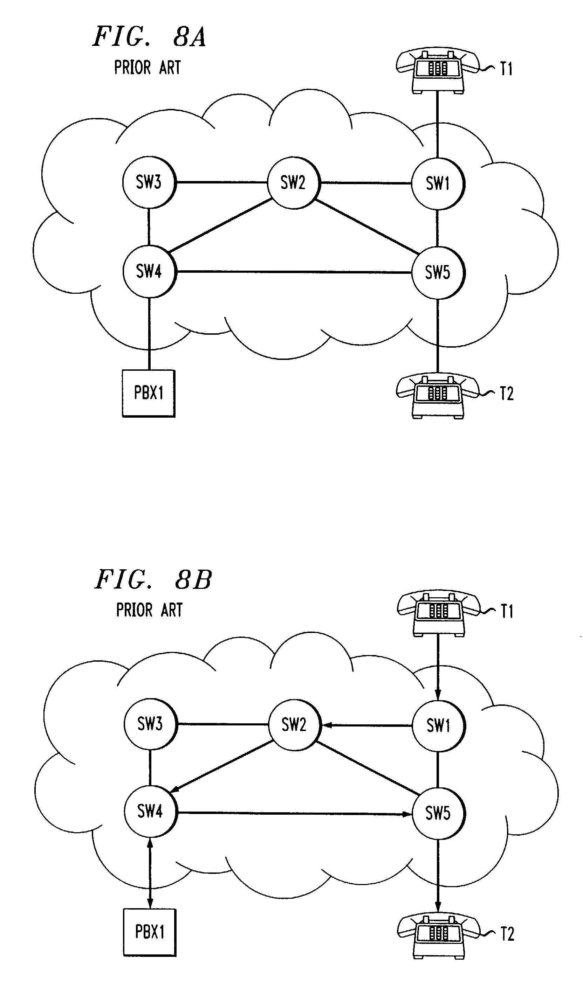

Some systems that provide advertiser supported communication services are in place. See, for example, "Europe Offering Free Calls, But First, A Word From...", New York Times, Sept. 28, 1997. Typically, shown in FIG. 8(a), such service providers connect communication equipment to a communication network, such as the Public Switched Telephone Network ("PSTN"). Such equipment may connect to the PSTN via a private branch exchange, PBX1, connected to a switch, SW3, of the PSTN.

To place a call to a party at telephone T2 using the advertiser supported service, a calling party at telephone Tl must enter two telephone numbers. The first telephone number represents the service provider. It causes the communication network to connect telephone T1 to PBX1. When this call is completed, the calling party must enter a second number identifying the party to be called (at telephone T2). After PBX1 plays an advertisement to the caller, it forwards the call to telephone T2.

The known service suffers many disadvantages. First, it is cumbersome. The consumer is forced to enter two telephone numbers which may cause confusion or at least reduce the ease with which a consumer uses the service. The routine must be invoked for every call the consumer makes under the services. It is not possible for a regular user of the service to invoke the advertisement supported service by default. Accordingly, there is a need in the art for a simplified scheme of providing advertiser supported communication services to consumers.

The known advertisement supported communication service also consumes unnecessary resources within the communication network. Because the call is forwarded from PBX1 to telephone T2, the call path extends through the network in two "legs" as shown in FIG. 8(b). In a first leg, the call path extends from telephone T1 to PBX1 via switches SW1, SW2 and SW4. In the second leg, the call path extends from PBX1 to telephone T2 via switches SW4 and SW5. Also, the call path consumes the resources of two call paths in switch SW4, the switch connected to the advertisement supported service provider. The call path traverses switch SW4 once as it extends from telephone T1 to PBX1, and a second time as it is forwarded from PBX1 to telephone T2. The service therefore consumes unnecessary resources in the PSTN. Accordingly, there is a need in the art for an advertiser supported communication service that conserves resources within the communication network.

Another alternative communication service provides information to members of an "affinity group." As is known in marketing fields, affinity groups are groups of consumers that possess a strong common interest. A frequently cited example is an affinity group of sports enthusiasts having an interest either in a type of sport or in a certain sports team. Goods and services that exhibit ties to the affinity group subject (the sports team) may be sold at a premium rate. In the communications fields, although affinity group news hotlines abound, there has been very little success in integrating affinity group techniques with communication services.

Accordingly, there is a need in the art for a communication service that selectively provides affinity group services to select subscribers.

### SUMMARY OF THE INVENTION

The present invention alleviates the disadvantages of the prior art to a great extent by providing a communication service in which advertisers pay for communication services initiated by a caller. A caller may invoke the service by entering only the telephone number identifying the desired connection. A communication switch interprets the digits entered by the caller, determines whether the caller wishes to invoke the advertiser supported communication service and, if so, plays a message to the caller. At the end of the message the communication switch completes the desired connection.

In a second embodiment, a communication service provides an affinity group telecommunication service. A telecommunication switch determines whether when a caller generates an off-hook condition. Based upon the interface between the switch and the caller's telephone equipment, the switch determines if the caller is a member of an affinity group. If so, the switch applies a handling option to the call.

### BRIEF DESCRIPTION OF THE DRAWINGS

FIG. 1 is a block diagram illustrating a central office switch constructed in accordance with the present invention.

FIG. 2 is a block diagram of a method of operation of a switch in accordance with an embodiment of the present invention.

FIG. 3 is a block diagram of a communication network operating in accordance with an embodiment of the present invention.

FIG. 4 is a flow diagram of a method of operation of a switch operating in accordance with the present invention.

FIG. 5 is a flow diagram of a method of operation of an embodiment of the present invention.

FIG. 6 is a flow diagram of a method of operation of a switch in accordance with an embodiment of the present invention.

FIG. 7 illustrates a method of operation of an affinity group based communication service.

FIGS. 8(a) and 8(b) are block diagrams illustrating a known advertisement supported communication service.

### DETAILED DESCRIPTION

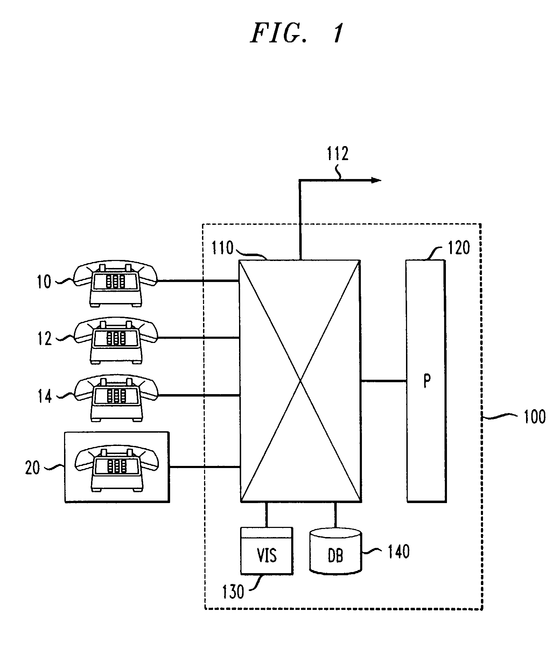

Turning now to FIG. 1, there is shown a central office switch 100 according to an embodiment of the present invention. A central office switch 100 is the communication equipment that connects directly to the caller's telephone 10. The central office switch 100 includes a switch matrix 110 and a processor 120 that controls the switch matrix 110. The switch matrix 110 is connected to telephones 10, 12, 14 over telephone lines. The switch matrix 110 also is connected to other switches in the communication network (not shown) over an interconnecting trunk line 112. The central office switch 100 includes a voice information server ("VIS") 130 and a database 140, both connected to the switch matrix 110. The processor 120 and switch matrix 110 of the central office switch may be found in a model SESS switch, currently available from Lucent Technologies of Murray Hill, New Jersey. The VIS 130 may be the Conversant system, also commercially available from Lucent Technologies.

The database 140 contains customer profiles for each telephone served by the central office switch. According to an embodiment of the invention, customers desiring to participate in the advertisement supported service would preregister. Accordingly, the customer profiles identify for each telephone whether the customer is a participant in the advertisement supported service. Optionally, it may include demographic or psychographic information such as age, gender, income level, address, etc., which information could be used to provide target specific advertisements. Alternatively, the database 140 may store customer histories including such information as messages played to the customer in the past or the rates of such messages.

In addition to customer profiles, the database 140 also may store advertisements as message data to be interpreted and played by the VIS 130. Furthermore, the database may provide a demographic profile of an intended audience for the advertisements.

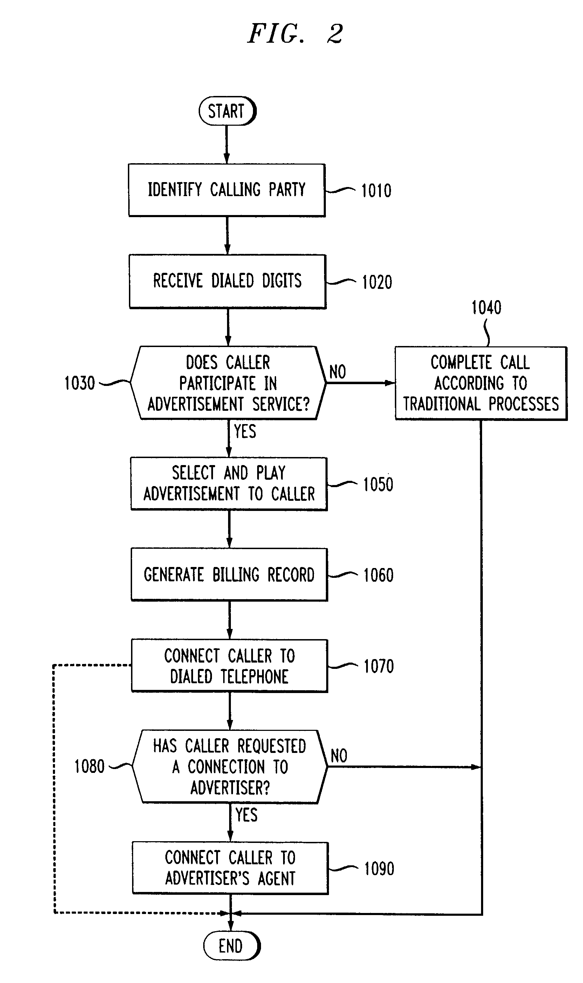

The central office switch 100 provides advertising supported telecommunication services to subscribers. In an embodiment, the system provides the advertising supported communication services according to the method of FIG. 2.

To begin an advertising supported telephone call, a caller generates an off-hook condition at the caller's telephone 10. The central office switch 110 identifies the caller by identifying the telephone line that generated the off-hook condition (Step 1010). The processor 120 receives entered digits or speech from the telephone 10 identifying a telephone to be called (Step 1020). As part of the call set-up procedure, the processor 120 determines whether the caller is a participant in the advertising supported telecommunications service (Step 1030). If the caller is not a participant, the processor 120 completes the call according to traditional processes (Step 1040) and aborts the method of FIG. 2.

However, if the telephone 10 is a participant in the service, the processor 120 selects and plays an advertisement to the telephone 10 (Step 1050). The processor 120 causes the switch matrix 110 to connect the telephone 10 to the VIS 130. The processor 120 selects a message contained in the database 140 and causes the VIS 130 to play the selected message. The processor 120 may select messages at random. Optionally, the processor 120 may refer to the demographic profile of the caller and the demographic profile of the advertisements to identify an appropriate advertisement to be played to the caller. If so, the processor 120 may select a message based on a correlation between the two profiles. In a second option, the processor 120 may prompt the caller to select one message from several options. The caller may select an option by a dialed, touch-tone or spoken command, either of which may be decoded by the VIS 130.

Upon conclusion of the advertisement message, the processor 120 generates a billing record representative of the call (Step 1060). The billing record identifies information typical to known billing records in communication networks such as the time of the call, the originating telephone and the terminating telephone. Additionally, the billing record indicates that the call was made pursuant to the advertisement supported communication service. The billing record may identify the message that was played or the identity of the message's sponsor and, optionally, any rate information associated with the message. In an embodiment, advertisers may provide different rate premiums to callers for listening to their messages. Rate premiums cause callers to receive discounted or free calls.

The processor 120 begins call set-up procedures to connect telephone 10 with the telephone identified in the entered digits received at Step 1020 (Step 1070). Optionally, messages may be presented to the caller and/or the called party during the progress of the call itself. In one embodiment, short messages, of 10 seconds or less, may be interspersed every five minutes. The processor may terminate the method at the conclusion of the call.

As an option, the processor 120 may be programmed to monitor activity from telephone 10 while the advertisement is being played at Step 1050. The caller may be instructed prior to hearing the message that it may request to be connected to a representative of the advertiser at the conclusion of the desired call. The representative may be a human attendant or an interactive automated voice response system. Thus, as an option, the VIS monitors signals received from telephone 10 while it plays the selected message to determine whether the caller makes such a request (Step 1080). If so, the processor 120 places a second call between telephone 10 and a representative of the advertiser (Step 1090). The telephone number of the representative may be stored in database 140 along with the messages themselves. If the caller makes no such request, the processor 120 terminates the method. Also, at the conclusion of Step 1090, the processor terminates the method.

At anytime during the progress of the message, the caller may command the processor 120 to abort the message. The abort command may be a predetermined touch-tone or spoken command that is decoded by the VIS 130. In response, the processor 120 commands the VIS 130 to discontinue the message. The processor 120 completes the desired call according to any discount to the caller.

At Step 1020, the processor 120 may be configured to recognize emergency numbers ("911" or an equivalent). Detection of an emergency number causes the method to terminate and an emergency call connection to be made as is known.

By providing a database co-located with the central office switch 100, the service advantageously accommodates both national and regional advertising. As is known, the central office switch 100 typically serves subscribers of some discrete geographic region. Accordingly, the database 140 may be configured to store advertising messages of regional advertisers. Also, the database may be configured to store messages of national advertisers or may coordinate with a second database (not shown) within the communication network that stores the national advertisements. In this distributed database scheme, the processor 120 may select among regional and national advertisements based on any desired criterion, including prompting a caller for the caller's preference.

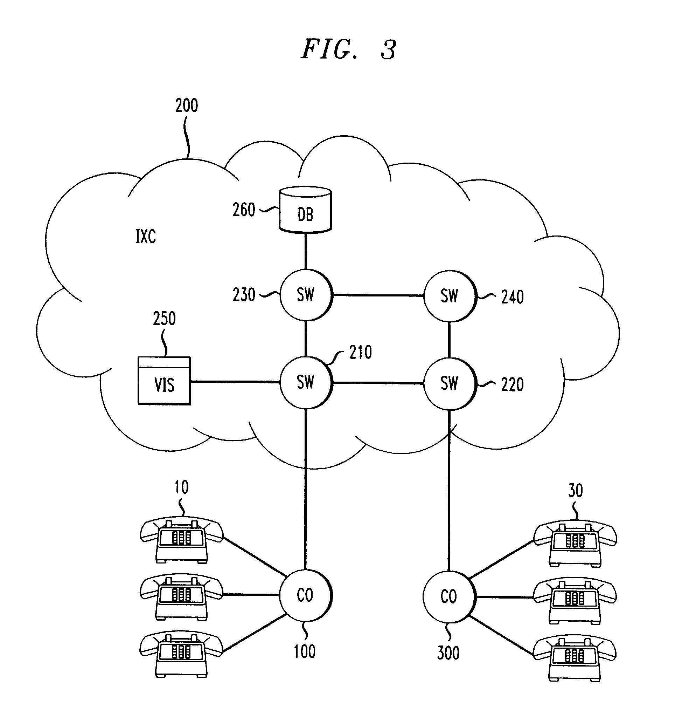

The present invention finds application in switches other than a central office switch 100. For example, as shown in FIG. 3, the present invention may be implemented in telecommunication switches 210-240 in an interexchange communication network ("IXC") 200. There, the IXC 200 is populated by a number of communication switches, such as model 4ESS switches available from Lucent Technologies. When the IXC 200 establishes a call connection between telephones 10 and 30, for example, each switch in the connection path acts as a switching node. The switch 210 includes a processor and switch matrix (not shown) in a manner similar to central office switch 100. A switch that implements the present invention may be provided with a VIS 250 and database 260 either directly or indirectly through other switches.

An IXC switch such as 210 that implements the present invention can also operate in accordance with the method of FIG. 2. If a caller at telephone 10 attempts to complete a call that traverses the IXC 200, an IXC switch 210 in communication with the central office switch 100 may implement the method of FIG. 2. First, the IXC switch 210 identifies the calling party (Step 1010). The IXC switch 210 may receive an automatic number identifier ("ANI") from the central office switch 100 that identifies the calling party. The IXC switch 210 receives the entered number entered at telephone 10 (Step 1020). The IXC switch 210 determines whether the caller is a participant in the advertisement supported service (Step 1030) and, if so, selects and plays an advertisement to the caller (Step 1050).

To determine whether the caller is a participant in the service, the IXC switch 210 need not be co-located with the database 260. The IXC switch 210 may communicate with the database 260 via one or more intermediate switches 230 in the IXC 200. The IXC switch 210 queries the database 260 to determine whether the ANI received from the central office switch maps to a participant to the service.

To play a message to the caller, the communication switch 210 establishes a call path between telephone 10 and the VIS 250. In the embodiment illustrated in FIG. 3, IXC switch 210 is provided in direct communication with the VIS 250 and may establish the path directly to the VIS 250. However, IXC switch 220, which may provide the service to telephone 30, communicates with switch 210 to establish the desired call path to the VIS 250. Accordingly, there is no requirement that the VIS 250 be co-located with a switch that performs the method.

Steps 1060 through 1090 are performed as described in connection with FIG. 1.

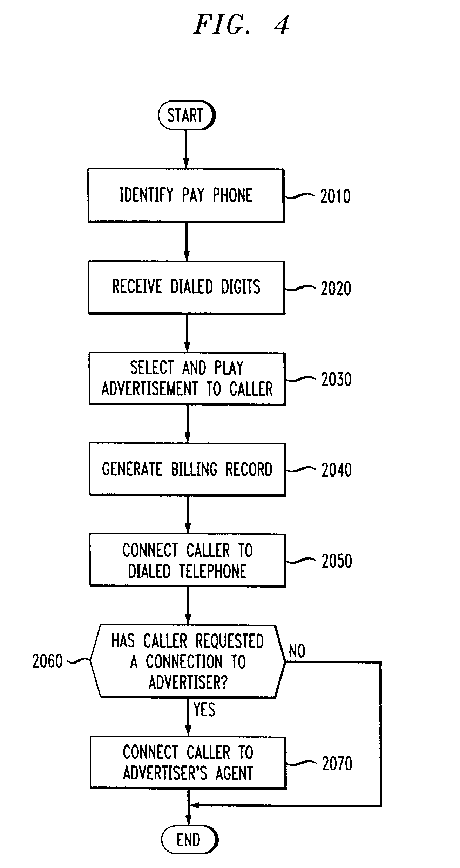

The present invention may also be implemented with telephone equipment that is not associated with any particular subscriber. For example, in FIG. 1, central office switch 100 is provided in communication with a pay phone 20. Advertisement supported communication services may be provided to a pay phone 20 in accordance with the method of FIG. 4. There an advertisement supported call is initiated when a person generates an off-hook condition at the pay phone 20. The processor 120 identifies the off-hook telephone as a pay phone 20 and receives entered digits entered there (Steps 2010 and 2020). The processor 120 then selects and plays an advertisement to the caller (Step 2030). As with the method of FIG. 2, the processor 120 causes the switch matrix 110 to connect the pay phone 20 to the VIS 130, selects a message from the database 140 and causes the VIS 130 to play the message to the person at the pay phone 20.

When the message concludes, the processor 120 generates a billing record (Step 2040) and places a call to a telephone identified by the entered digits.

As with the method of FIG. 2, the processor 120 may optionally determine whether the caller requested to be connected to an advertiser at the conclusion of the call (Step 2060). If the caller at the pay phone 20 has made such a request, at the conclusion of the call, the processor 120 connects the pay phone 20 to an agent of the advertiser.

In the pay phone embodiments, the selection of messages may be influenced by predetermined selection criterion. Geographic location is one such criterion. The switch 100 may be programmed to associate pay phones in certain locations, such as an airport, with certain messages. Thus, the present invention may provide targeted advertising to callers even when the caller's identity is not known. Of course, consumers benefit from being freed from having to enter-change or charge card information to a pay phone.

The method of FIG. 4 also may be adapted to integrate it with traditional phone service. Customers may be instructed to invoke the rate discounting method by entering a predetermined command (touch-tone sequence or spoken command) during call setup. The switch detects the command and invokes the method.

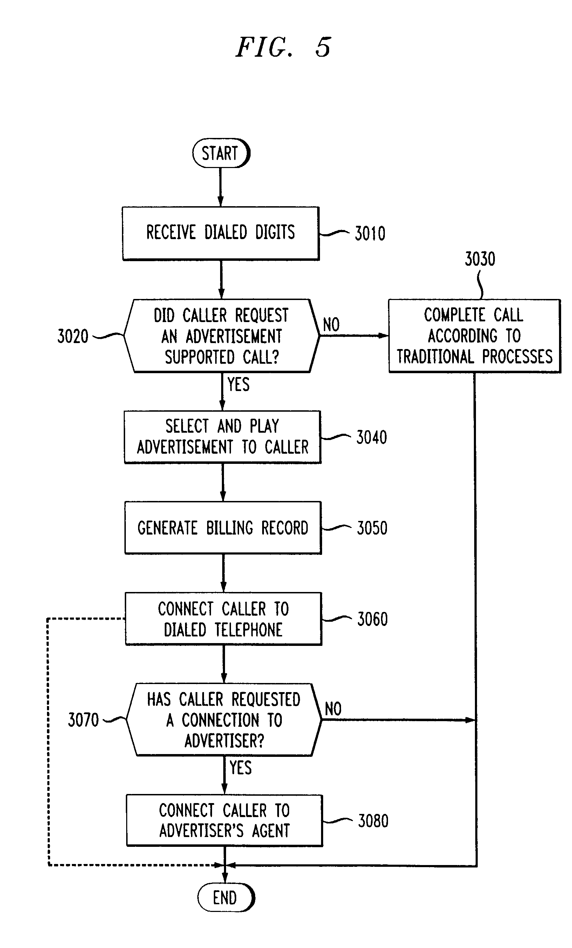

The advertisement supported communication service of the present invention also finds application where preregistration has not occurred. Such a method is shown in FIG. 5. According to this method, the central office switch 100 receives entered digits entered at telephone 10 (Step 3010). The central office switch determines whether the entered digits also include a request that the call be placed under an advertisement supported call (Step 3020). For example, the entered digits may include a prefix code designating the advertisement supported service. If not, the central office switch 100 completes the telephone call according to traditional processes (Step 3030).

If the caller does request an advertisement supported call, the processor 120 selects and plays an advertisement to the caller (Step 3040). At the conclusion of the advertisement message, the processor 120 generates a billing record (Step 3050) and connects the caller to the telephone identified by the entered digits (Step 3060). Optionally, when the caller has been connected with the called party, the processor 120 may terminate the method of FIG. 5.

Alternatively, however, the VIS 130 may determine whether the caller requested that a connection to a representative of the advertiser at the conclusion of the desired call (Step 3070). If so, the processor 120 connects the caller to the advertiser's agent (Step 3080). If the caller made no such request, or when the processor 120 has connected the caller to the advertiser's agent, the processor 120 terminates the method.

The methods of the present invention impose no order of operation between the presentation of messages and the completion of calls. In FIGS. 2, 4 and 5, the methods illustrate call completion as being made after the message is played to the caller. These steps may be inverted consistent with the principles of the present invention.

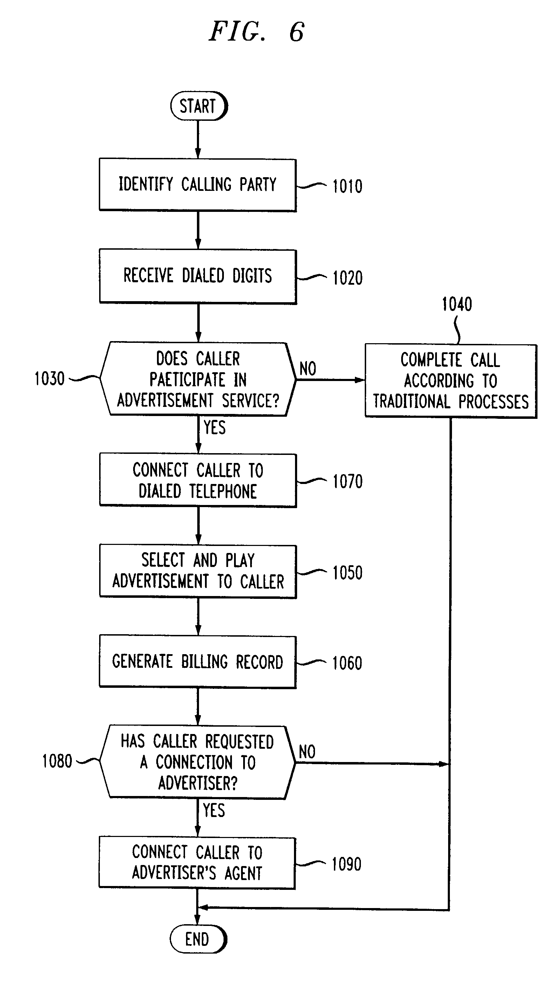

As an example, FIG. 6 illustrates a method very much like the method of FIG. 2 in which the steps of connecting the caller to the dialed telephone (Step 1070) and selecting a message to be played to the caller (Step 1050) are reversed. In this embodiment, when the caller completes the desired call, the caller is presented with the advertising message. When the message has been played to the caller in its entirety, the billing record may be generated awarding the caller the rate discount (Step 1060). Of course, the switch 100 may determine if the caller hangs up before the message completes. In this case, the central office switch 100 does not award the rate discount.

The order of operation shown in FIG. 6 possesses an advantage over that shown in FIG. 2. At Step 1050, when the message is selected, the call has been completed and the length of the call is known. The system may use the length of the call as a selection criterion. Because longer calls typically are more expensive, the system may select messages with higher rate premiums for the longer calls.

In another alternative, an embodiment of the present invention may broadcast selected messages to both the caller and the called party. In this embodiment, a call connection between the caller and the called party is made before the advertisement is played. However, the message may be played immediately upon commencement of the connection, at the completion of their desired call or during the call.

Another embodiment of the present invention integrates affinity group messaging with conventional communication services. The billing system of the present invention also may be used in the context of affinity group telecommunication services. Affinity group telecommunication services are more completely described in the co-pending patent application "Method and System for Affinity Group Telephone Service," serial number 09/020,931 filed February 9, 1998, the disclosure of which is incorporated herein by reference. The affinity group telecommunication services may be invoked on a pay per call basis. In such an embodiment, a caller invokes the service by entering a digit sequence representing a request for the affinity group service when the caller dials a called party.

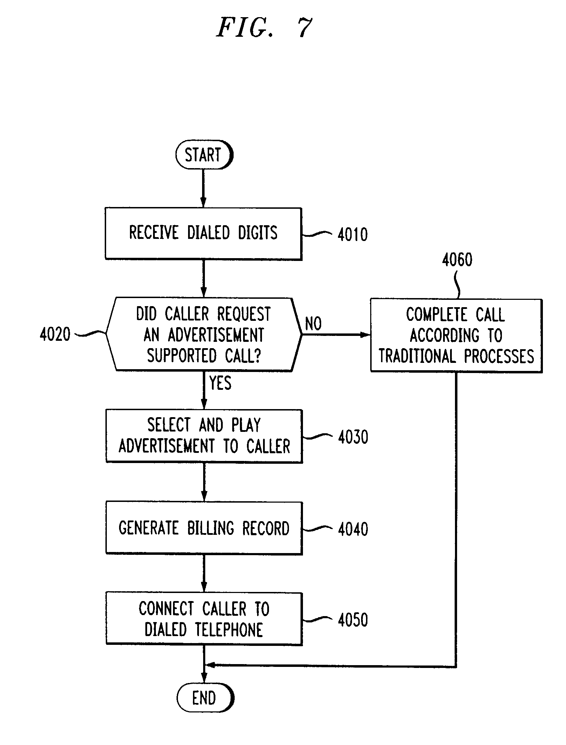

FIG. 7 illustrates a method of operation of a communication switch in accordance with an embodiment of the present invention. According to the method, the switch receives dialed digits entered by the caller (Step 4010) and determines whether the caller requested affinity group services (Step 4020). If so, the switch provides the requested service (Step 4030). The switch also generates a billing record representing the affinity group call (Step 4040). The switch places a call to the called party (Step 4050).

If, at step 4020, the call is not an affinity group call, the switch completes the call according to conventional procedures (Step 4060).

The billing record includes information conventional to known billing records such as the time of day, the originating telephone, the destination telephone and the length of the call. The billing record of the present invention also includes information identifying that the call requested the affinity group service and identifies the particular affinity group to which it relates. The billing record may also indicate a charge rate to be applied to the affinity group service.

Some affinity groups may be income generating for third parties. For example, an affinity group directed to a national sports team may involve royalty payments to be made to the sports team or its representative pursuant to a license. Further, an affinity group may be created for the benefit of a charity wherein each affinity group call generates a donation to the charity. In each case, the affinity group call involves a payment to a third party. To accommodate payments to third parties, the billing record may include such information as a third party payee and a rate to be credited to the payee.

To facilitate the discussion, the present invention has been described with reference to "advertisements." However, it should be understood that the principles of the present invention apply to any kind of information message, in any context. Any commercial motivations that cause a party to include their messages in the sponsor supported communication service of the present invention is immaterial to the invention itself.

Several embodiments of the present invention are specifically illustrated and described herein. However, it will be appreciated that modifications and variations of the present invention are covered by the above teachings and within the purview of the appended claims without departing from the spirit and intended scope of the invention.

## Claims

1. A method of providing sponsor supported communication services, comprising the steps of:
identifying a caller,
receiving a signal from a caller identifying a party to be called,
determining whether the caller is a participant to the sponsor supported communication services,
if so, playing a message to the caller, and
placing a call connection from the caller to the called party.

2. The method of claim 1, further comprising the steps of:
during the playing step, monitoring activity from the caller, and
if the caller's activity indicates a request to be connected to a representative of the message, identifying the representative, and
placing a call connection from the caller to the called party.

3. The method of claim 1, wherein the receiving step is performed in a central office switch.

4. The method of claim 1, wherein the receiving step is performed at a communication switch of an interexchange communication network.

5. The method of claim 1, wherein the playing step includes a step of selecting a message at random.

6. The method of claim 1, wherein the playing step includes the steps of:
retrieving a profile of the caller, and
selecting a message based on a correlation between the caller's profile and a profile of an intended audience of the message.

7. The method of claim 1, wherein the playing step includes the steps of:
identifying to the caller available messages,
prompting the subscriber to select one of the messages, and
responsive to the selection, playing the selected message.

8. The method of claim 1, wherein the playing step occurs after the placing step and includes the steps of:
determining the time of the call, and
selecting a message based on the length of the call.

9. The method of claim 1, further comprising a step of generating a billing record representative of the call, the billing record identifying a rate premium associated with the message.

10. The method of claim 9, wherein the billing record further identifies the message that is played.

11. The method of claim 9, wherein the billing record further identifies a sponsor of the message that is played.

12. The method of claim 1, wherein the playing step occurs during the call connection of the placing step.

13. A communication switch comprising:
a processing system.
a switch matrix responsive to decisions by the processor and in communication with a caller's telephone,
a voice information server controlled by the processor and in communication with the switch matrix, and
a database storing a profile of the caller and message data,
wherein, responsive to a new call initiated by the caller,
the processor:
receives entered digits entered at the telephone,
retrieves the caller's profile,
determines whether the caller is a participant to a sponsor supported communication service,
if so,
causes the switch matrix to establish a connection between the caller's telephone and the voice information server,
causes the voice information server to play a selected message to the caller's telephone, and
at the conclusion of the message, places a call connection as determined by the entered digits.

14. The switch of claim 13, wherein:
as it plays the message, the voice information server monitors activity from the caller's telephone,
when the voice information server detects a predetermined code from the caller's telephone, the voice information server signals the processor, and
responsive to the signal from the voice information server, the processor identifies a contact associated with the selected message and places a second call to the contact.

15. The switch of claim 13, wherein the switch is a central office switch connected to the caller's telephone by telephone lines.

16. The switch of claim 13, wherein the switch is provided in an interexchange communication network and communicating with the caller's telephone via other communication switches.

17. The switch of claim 13, wherein the processor selects messages to be played at random.

18. The switch of claim 13, wherein:
the caller profile provides demographic information of the caller,
the database stores profiles for messages of an intended audience of the message, and
the processor selects one of the messages to be played based on a correlation between the caller's profile and the messages' profiles.

19. The switch of claim 13, wherein:
the processor causes the voice information server to prompt the caller to select a message to be played, and
responsive to the selection, the processor selects a message to be played.

20. The switch of claim 13, wherein the processor generates a billing record of the call, the billing record identifying the message that is played.

21. The switch of claim 20 wherein:
the database further associates rate premiums with the messages, and
the billing record identifies the rate premium of the message that is played.

22. A method providing sponsor supported communication services, comprising the steps of:
receiving entered digits from a caller, and
determining whether the entered digits include a code representing a request for a sponsor supported communication service,
if so, playing a message to the caller,
at the conclusion of the message, placing a call as dictated by caller input.

23. The method of claim 22, wherein the caller input is entered digits.

24. The method of claim 22, wherein the caller input is a spoken command.

25. The method of claim 22, further comprising the steps of:
monitoring caller activity, and
when the caller requests to be connected to a contact associated with the played message, placing a call connection between the caller and the contact.

26. A method for integrating a provisioning of service and information announcements in a communication network, the method comprising the steps of:
storing an information announcement in a database associated with a switching node;
analyzing a request for a call connection routed through said switching node:
detecting in the analysis whether a caller is to be a recipient of a stored information announcement; and
completing the requested call connection to a termination point.

27. The method of claim 26, further comprising, when the caller is to be a recipient, a step of playing the information announcement prior to the completing step.

28. The method of claim 26, further comprising, when the caller is to be a recipient, a step of playing the information announcement subsequent to the completing step.

29. The method of claim 26, wherein the detecting step includes the steps of:
identifying the caller, and
determining whether the caller is a participant to sponsor supported communication services and, if so, the caller is to be a recipient of the stored information announcement.

30. The method of claim 26, wherein the detecting step determines the caller to be a recipient of the stored information announcement when the request includes a request for such an announcement to be played.

31. A method of providing an affinity group based telecommunication service, comprising:
identifying a caller to a new call completion request;
determining whether the caller is a member of a n affinity group,
when the caller is a member of an affinity group, applying a call handling option to the call, the call handling option being indicative of the affinity group, and
thereafter, completing a call request.

32. The method of claim 31, wherein the applying step includes a step of generating a dial tone signal unique to the affinity group.

33. The method of claim 31, wherein the applying step includes steps of:
selecting a message related to the affinity group, and
playing the selected message to the caller.
